# EUROPÄISCHE PATENTSCHRIFT

(11) **EP 3 362 252 B1**
(45) Veröffentlichungstag und Bekanntmachung des Hinweises auf die Patenterteilung: **13.11.2019**
(21) Anmeldenummer: 17723926.6
(22) Anmeldetag: 16.05.2017
(51) Int. Cl.: B29C 49/56, B29C 49/06, B29C 49/48, B29L 31/00

(54) **FORMTRÄGER ZUR AUFNAHME EINER FORM ZUR FORMUNG VON HOHLKÖRPERN AUS VORFORMLINGEN**
MOULD CARRIER FOR RECEIVING A MOULD FOR FORMING HOLLOW ARTICLES FROM PARISONS
PORTE-MOULE DESTINÉ À LA RÉCEPTION D'UN MOULE DE MISE EN FORME DE CORPS CREUX À PARTIR DE PRÉFORMES

(30) Priorität: 19.05.2016 DE 102016006211
(43) Veröffentlichungstag der Anmeldung: 22.08.2018
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE)
(74) Vertreter: Meissner Bolte Partnerschaft mbB
(86) Internationale Anmeldenummer: PCT/EP2017/000592
(87) Internationale Veröffentlichungsnummer: WO 2017/198333

(56) Entgegenhaltungen:
- DE-A1-102010 022 130
- DE-U1-202004 017 530
- US-A- 3 685 943
- US-A1- 2009 039 567
- US-A1- 2010 203 185
- US-A1- 2013 115 326

## Beschreibung

Die vorliegende Erfindung betrifft einen Formträger zur Aufnahme einer Form zur Formung von Hohlkörpern aus Vorformlingen.

Die Dokumente US2013/115326A1, DE20 2004 017530U1 und DE10 2010 022130A1 beschreiben Formträger aus dem Stand der Technik.

Hohlkörper, insbesondere Behälter, wie z.B. Flaschen, werden heute oft im Blasformverfahren innerhalb einer geschlossenen Form aus einem Vorformling aus einem thermoplastischen Kunststoff geformt. Dabei wird der Vorformling, der beispielsweise aus PET bestehen kann, zunächst erwärmt, so dass er plastisch verformbar ist, und in eine Form eingebracht, die der Form des zu formenden Behälters entspricht.

Die Form ist in der Regel zweiteilig mit einer vertikalen Teilungsebene parallel zur Symmetrieachse des zu formenden Behälters, so dass sie zur Entnahme des fertig ausgeformten Behälters geöffnet werden kann. Die Formteile können den Boden des zu formenden Behälters mit umfassen, oder es kann eine separate Bodenform eingesetzt werden, die für die zu beschreibende Erfindung jedoch nicht weiter vor Bedeutung ist. Im Rahmen dieser Anmeldung soll insofern von einer zweiteiligen Form gesprochen werden, auch wenn die Form noch weitere, für die Erfindung irrelevante Teile umfassen kann, z. B. eine Bodenform.

Die Form wird in einen Formträger eingesetzt, der über zwei gegeneinander bewegliche Teile verfügt, so dass die Form von einer offenen in eine geschlossene Position überführt werden kann.

Die Ausformung des Behälters erfolgt nach Einbringen des Vorformlings in die Form durch Einleiten eines Druckmediums in den Vorformling, wobei das Druckmedium gasförmig oder flüssig sein kann. Bei der Verwendung eines gasförmigen Mediums im klassischen Blasformverfahren wird ein Behälter ausgeformt, der ggfs. im nächsten Schritt gefüllt werden kann. Bei der Verwendung eines flüssigen Druckmediums bei der hydraulischen Behälterformung kann das Füllgut als Druckmedium verwendet werden, so dass in einem Arbeitsgang ein gefüllter Behälter, beispielsweise eine Wasserflasche, hergestellt werden kann. Beide Alternativen sollen hier umfasst sein, da die nachfolgend beschriebene Erfindung für beide Verfahren einsetzbar ist. Die Vorteile der Erfindung treten aber insbesondere bei der hydraulischen Formung hervor.

Bei der Behälterformung wird das Druckmedium unter hohem Druck in den Vorformling eingeleitet, wobei der Vorformling, ggfs. unter Zuhilfenahme einer Reckstange, axial und radial gestreckt wird, so dass sich das Material an die Innenfläche der Form anlegt und den Behälter ausbildet.

Bei der hydraulischen simultanen Formung und Füllung von Behältern mit dem Füllgut als Füllmedium kann es beim Aufsetzen des Füllkopfes auf den Vorformling bzw. beim Abnehmen vom geformten und gefüllten Behälter durch Tropfenbildung zum Verspritzen von Füllgut kommen. Insbesondere bei der Abfüllung von kohlensäurehaltigem Füllgut kann es auch zu einem Aufschäumen des Füllguts und somit zum Überlaufen des Behälters nach der Druckentlastung kommen. Außerdem kann es immer zum Platzen eines Behälters während des Form- und Füllvorgangs kommen.

Aus Hygienegründen ist eine regelmäßige gründliche Reinigung der Form erforderlich, insbesondere wenn dort Füllgut ausgelaufen ist. Der Reinigungsvorgang soll dabei einfach und schnell durchgeführt werden können. Wird die Antriebsmechanik des beweglichen Formträgers mit verunreinigt, wird der Reinigungsvorgang aufwändiger und schwieriger. Ein längerer und somit kostenintensiverer Stillstand der Maschine, als wenn nur die Form und der Formträger mit überwiegend glatten und leicht zu reinigenden Flächen gereinigt werden müssen, wäre dann erforderlich.

Es ist deshalb Aufgabe der Erfindung, einen Formträger zur Aufnahme einer Form zur Formung von Hohlkörpern vorzuschlagen, dessen Antriebsmechanik zuverlässig vor Verunreinigungen durch Füllgut geschützt ist.

Die Aufgabe wird erfindungsgemäß gelöst durch einen Formträger zur Aufnahme einer Form zur Formung von Hohlkörpern, insbesondere von Behältern, aus Vorformlingen durch ein unter Druck in den Vorformling eingeleitetes gasförmiges oder flüssiges Druckmedium, der vertikal geteilt ist, und wobei zumindest ein Teil des Formträgers um eine Drehachse drehbar gelagert ist, so dass die beiden Teile mittels einer Antriebsmechanik von einer geöffneten Position in eine geschlossene Position überführbar sind. Der Formträger und die Antriebsmechanik sind dabei räumlich horizontal voneinander beabstandet und durch einen Verbindungsbereich miteinander verbunden, der eine vertikale Trennebene durchquert. Der erfindungsgemäße Formträger ist dadurch gekennzeichnet, dass in der Trennebene eine Schutzwand angeordnet ist.

Die Begriffe vertikal und horizontal sind hier auf die übliche Anordnung eines Formträgers auf dem Formrad bzw. Form- und Füllrad einer Maschine zum Formen oder Formen und Füllen von Behältern aus Vorformlingen bezogen. In solchen Maschinen sind die Prozessräder in der Regel in einer horizontalen Ebene angeordnet und rotieren um eine vertikale Achse. Die Form ist vertikal geteilt, so dass auch der Formträger vertikal geteilt sein muss. Die beweglichen Teile des Formträgers sind deshalb üblicherweise um eine vertikale Achse drehbar gelagert.

Wenigstens ein Teil des vertikal geteilten Formträgers ist drehbar gelagert und wird von einer Antriebsmechanik angetrieben. Es können aber auch beide Teile des Formträgers drehbar gelagert sein, und zwar entweder um eine jeweils eigene Drehachse oder um eine gemeinsame Drehachse.

Die Antriebsmechanik soll horizontal vom Formträger beabstandet sein. Dabei soll ein Verbindungsbereich den eigentlichen Formträger mit der Antriebsmechanik verbinden.

Dieser Verbindungsbereich durchquert eine zunächst gedachte vertikale Trennebene, so dass der eigentliche Formträger diesseits der Trennebene und die Antriebsmechanik jenseits der Trennebene liegen.

Erfindungsgemäß soll in der Trennebene eine Schutzwand angeordnet sein. Durch die Schutzwand ist die Antriebsmechanik vom Formträger und der Form getrennt. Wird im Bereich der Form Füllgut verspritzt, so kann es die Antriebsmechanik nicht verunreinigen. Die Schutzwand ist vorzugsweise so ausgebildet, dass sie die Antriebsmechanik in ihrer vollen vertikalen Ausdehnung schützt. Verspritztes Füllgut kann nach unten an der Schutzwand ablaufen, ohne dass eine Berührung mit der Antriebsmechanik möglich ist.

Vorzugsweise ist die Schutzwand um den Verbindungsbereich zwischen dem Formträger und der Antriebsmechanik herum annähernd flüssigkeitsdicht. Eine grobe Abschottung der Antriebsmechanik kann aber auch schon ausreichen, da sie im Wesentlichen nur vor kleinen Mengen von verspritztem Füllgut schützen muss.

Die Dichtung der Schutzwand gegen den Formträger kann beispielsweise durch elastische Bälge oder Lippendichtungen erfolgen.

Die Trennebene kann vorzugsweise die Drehachse oder die Drehachsen des oder der drehbaren Teile des Formträgers umfassen.

Der Krümmungsradius der Oberflächen des Verbindungsbereichs des Formträgers in der Trennebene entspricht dabei vorteilhaft ihrem Abstand von der Drehachse des jeweiligen Formträgerteils. Bei der Drehung der Formträgerteile verändert sich die Position der Oberfläche in der Trennebene nicht, so dass der Ausschnitt in der Schutzwand eng gewählt werden und mit geringen Mitteln abgedichtet werden kann.

Ein Ausführungsbeispiel der Erfindung wird nachfolgend anhand der beigefügten Abbildungen näher erläutert, die Folgendes darstellen:
- Figur 1: zeigt eine Form- und Füllstation einer Anlage zum simultanen Formen und Füllen von Behältern aus Vorformlingen mit einem erfindungsgemäßen Formträger in perspektivischer Darstellung;
- Figuren 2a und 2b: zeigen einen erfindungsgemäßen Formträger in teilweiser Schnittdarstellung im horizontalen Schnitt in geöffneter und geschlossener Stellung.

Alle Darstellungen verstehen sich als Veranschaulichung des Prinzips der Erfindung. Sie sind teilweise vereinfacht dargestellt und umfassen nur die zur Veranschaulichung der Erfindung erforderlichen Bauteile. Die Größenrelationen der einzelnen Bauteile zueinander kann ein Fachmann mit seinem Fachwissen ohne Weiteres verändern oder den konkreten Bedürfnissen anpassen.

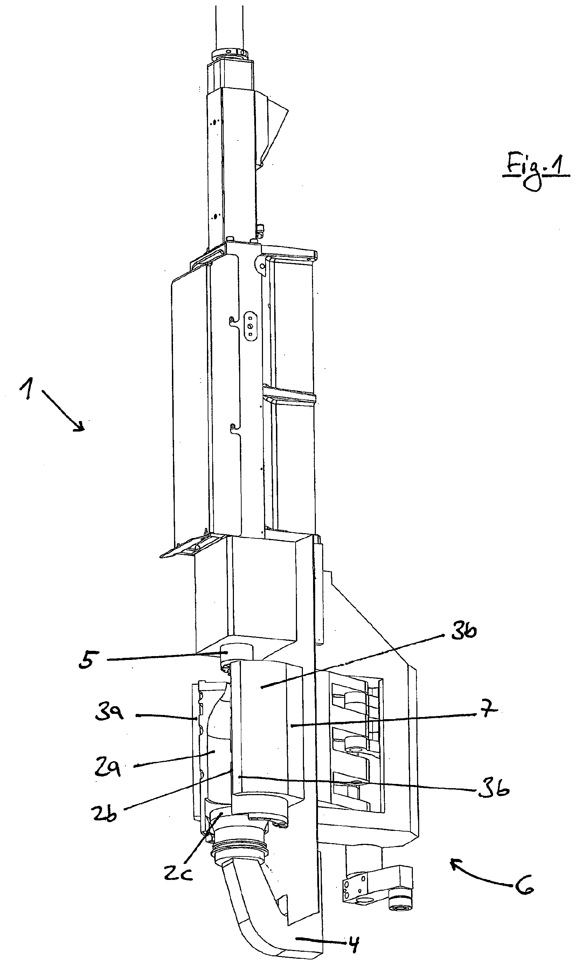

Figur 1 zeigt eine Form- und Füllstation einer Anlage zum simultanen Formen und Füllen von Flaschen aus Vorformlingen mit einem Ausführungsbeispiel eines erfindungsgemäßen Formträgers in perspektivischer Darstellung.

Die Form- und Füllstation 1 umfasst eine dreiteilige Form 2a, 2b, 2c, die aus zwei vertikal geteilten Formhälften 2a und 2b sowie einer Bodenform 2c besteht. Die Formhälften 2a und 2b sind auf einem Formträger 3a, 3b angeordnet, der vertikal geteilt ist. Der Bodenteil 2c der Form ist auf einem Arm 4 angeordnet.

Die Teile des Formträgers 3a und 3b sind um eine vertikale Drehachse drehbar gelagert, so dass die beiden Teile von einer geöffneten Position in eine geschlossene Position überführbar sind. Eine in der geschlossenen Position geformte und gefüllte Flasche kann in der geöffneten Position aus der Form- und Füllstation entnommen und der weiteren Bearbeitung zugeführt werden, beispielsweise auf einem Verschließ- oder Etikettierrad.

Hierfür muss die gefüllte Flasche vom Form- und Füllkopf 5 abgenommen werden. Dabei kann es zu Tropfenbildung am Form- und Füllkopf kommen, so dass Füllgut im Bereich der Form verspritzt werden kann. Außerdem kann es in seltenen Ausnahmefällen dazu kommen, dass ein Vorformling während der Umformung zur Flasche platzt, so dass Füllgut im Bereich der Form ausläuft. Die Form ist jedoch relativ einfach ohne aufwändige Demontage zu reinigen. Die Betätigungsmechanik zum Öffnen und Schließen der Form ist jedoch wesentlich schwieriger zu reinigen.

Der Antriebsmechanik des erfindungsgemäßen Formträgers und der Formträger selbst sind deshalb räumlich horizontal voneinander beabstandet und durch einen Verbindungsbereich 7 miteinander verbunden, der eine vertikale Trennebene durchquert, in der eine Schutzwand 8 angeordnet ist.

Die Schutzwand 8 trennt dabei den Bereich der Form vom Bereich der Antriebsmechanik, so dass im Bereich der Form verspritztes Füllgut nicht in die Antriebsmechanik eindringen kann.

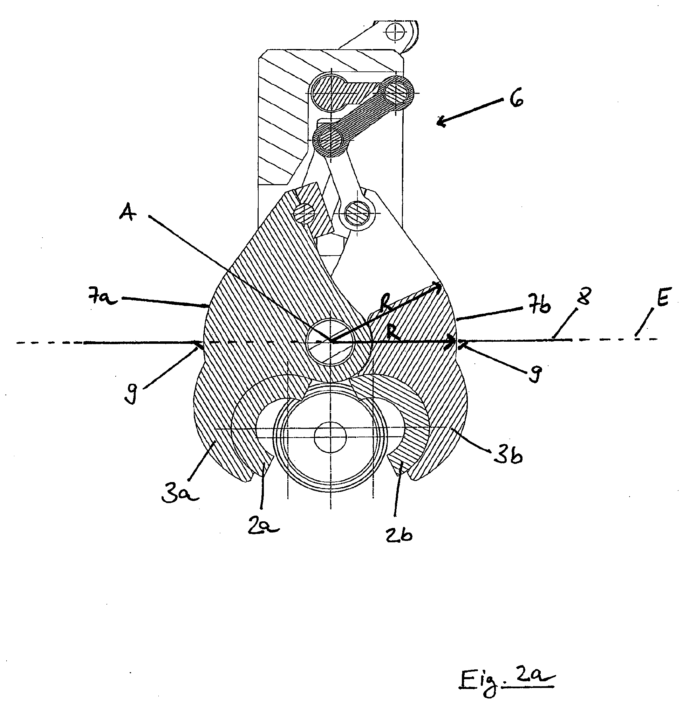

Figur 2a zeigt einen erfindungsgemäßen Formträger in teilweiser Schnittdarstellung im horizontalen Schnitt in geöffneter Stellung. Die Formhälften 2a, 2b sind auf den Hälften des vertikal geteilten Formträgers 3a, 3b montiert. Die Hälften 3a und 3b des Formträgers sind mittels einer Antriebsmechanik um eine Drehachse A drehbar gelagert.

Die Antriebsmechanik ist dabei räumlich horizontal vom Formträger beabstandet und durch einen Verbindungsbereich 7a, 7b mit dem Formträger verbunden. Im vorliegenden Ausführungsbeispiel liegt der Formträger diesseits und die Antriebsmechanik jenseits der Drehachse A.

Der Verbindungsbereich durchquert eine Ebene E, in der eine Schutzwand 8 angeordnet ist. Der Ausschnitt in der Schutzwand, der zur Durchführung des Verbindungsbereichs 7a, 7b erforderlich ist, schließt den Verbindungsbereich flüssigkeitsdicht ab, so dass kein Füllgut aus dem Bereich der Form in die Antriebsmechanik eindringen kann.

Vorteilhaft ist im dargestellten Ausführungsbeispiel der Krümmungsradius R der Oberflächen des Verbindungsbereichs 7a, 7b so gewählt, dass er in jeder Position des Formträgers in der Ebene der Schutzwand 8 dem Abstand R der Oberfläche von der Drehachse A der jeweiligen Hälfte des Formträgers 3a, 3b entspricht.

Dadurch kann erreicht werden, dass die Oberfläche bei der Drehbewegung des Formträgers während des Öffnungs- und Schließvorgangs in Bezug auf die Schutzwand 8 in unveränderter Position verbleibt. Die Schutzwand 8 kann deshalb in jeder Position dichtend mit der Oberfläche des Übergangsbereichs 7a, 7b abschließen. Hierfür ist z. B. eine Lippendichtung 9 vorgesehen.

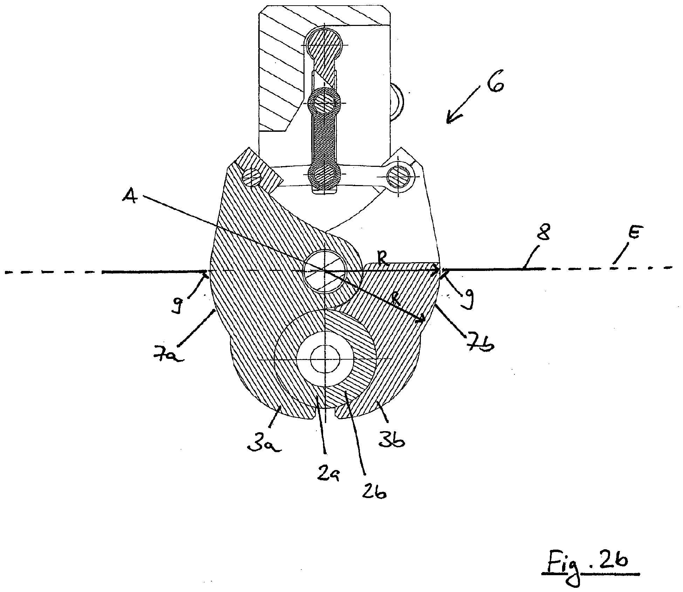

Figur 2b zeigt den Formträger aus Figur 2a in geschlossener Stellung. Es ist leicht erkennbar, das sich die Position der Oberfläche des Verbindungsbereichs 7a, 7b in Bezug auf die Schutzwand 8 bei der Drehbewegung der Formträgerhälften 3a, 3b nicht verändert, so dass die Lippendichtung 9 eine zuverlässige Dichtung des Formbereichs gegenüber der Antriebsmechanik erlaubt.

## Patentansprüche

1. Formträger (3a, 3b) zur Aufnahme einer Form (2a, 2b) zur Formung von Hohlkörpern, insbesondere von Behältern, aus Vorformlingen durch ein unter Druck in den Vorformling eingeleitetes, gasförmiges oder flüssiges Druckmedium,
der vertikal geteilt ist, und wobei zumindest ein Teil des Formträgers um eine Drehachse (A) drehbar gelagert ist, so dass die beiden Teile (3a, 3b) mittels einer Antriebsmechanik (6) von einer geöffneten Position in eine geschlossene Position überführbar sind,
und wobei der Formträger (3a, 3b) und die Antriebsmechanik (6) räumlich horizontal voneinander beabstandet und durch einen Verbindungsbereich (7, 7a, 7b) miteinander verbunden sind, der eine vertikale Trennebene (E) durchquert, wobei
in der Trennebene (E) eine Schutzwand (8) angeordnet ist und wobei die Schutzwand (8) gegen den Formträger durch Lippendichtungen (9) abgedichtet ist.

2. Formträger (3a, 3b) nach Anspruch 1, **dadurch gekennzeichnet, dass** beide Teile (3a, 3b) des Formträgers um jeweils eine oder eine gemeinsame Drehachse (A) drehbar gelagert sind.

3. Formträger (3a, 3b) nach Anspruch 2, **dadurch gekennzeichnet, dass** der Formträger diesseits und die Antriebsmechanik (6) jenseits der Drehachse (A) bzw. der Drehachsen der Formträgerteile (3a, 3b) angeordnet sind.

4. Formträger (3a, 3b) nach einem der Ansprüche 1 bis 3, **dadurch gekennzeichnet, dass** die Schutzwand (8) zumindest annähernd flüssigkeitsdicht um den Verbindungsbereich (7, 7a, 7b) abschließt.

5. Formträger (3a, 3b) nach einem der Ansprüche 1 bis 4, **dadurch gekennzeichnet, dass** die Trennebene (E) die Drehachse (A) oder die Drehachsen des oder der drehbaren Teile (3a, 3b) des Formträgers umfasst.

6. Formträger (3a, 3b) nach einem der Ansprüche 1 bis 5, **dadurch gekennzeichnet, dass** der Krümmungsradius (R) der Oberflächen des Verbindungsbereichs (7, 7a, 7b) des Formträgers in der Trennebene ihrem Abstand (R) von der Drehachse (A) des jeweiligen Formträgerteils (3a, 3b) entspricht.

## Claims

1. Mould carrier (3a, 3b) for receiving a mould (2a, 2b) for forming hollow articles, especially containers, from parisons by means of a gaseous or liquid pressure medium introduced into the parison under pressure,
which is vertically divided, and wherein at least one part of the mould carrier is rotatably mounted about a rotational axis (A), such that both parts (3a, 3b) can be moved from an open position to a closed position by means of a drive mechanism (6),
and wherein the mould carrier (3a, 3b) and the drive mechanism (6) are spaced horizontally from each other and connected to each other by a connection region (7, 7a, 7b), which passes through a vertical parting plane (E), wherein
a protective wall (8) is arranged in the parting plane (E) and wherein the protective wall (8) is sealed against the mould carrier by lip seals (9).

2. Mould carrier (3a, 3b) according to claim 1, **characterised in that** both parts (3a, 3b) of the mould carrier are rotatably mounted about respectively one or a common rotational axis (A).

3. Mould carrier (3a, 3b) according to claim 2, **characterised in that** the mould carrier is arranged on one side and the drive mechanism (6) on the other side of the rotational axis (A) or of the rotational axes of the mould carrier parts (3a, 3b).

4. Mould carrier (3a, 3b) according to anyone of the claims 1 through 3, **characterised in that** the protective wall (8) closes around the connection region (7, 7a, 7b) in an at least nearly liquid-tight manner.

5. Mould carrier (3a, 3b) according to anyone of the claims 1 through 4, **characterised in that** the parting plane (E) comprises the rotational axis (A) or the rotational axes of the rotatable part or rotatable parts (3a, 3b) of the mould carrier.

6. Mould carrier (3a, 3b) according to anyone of the claims 1 through 5, **characterised in that** the radius of curvature (R) of the surfaces of the connection region (7, 7a, 7b) of the mould carrier matches its distance (R) from the rotational axis (A) of the respective mould carrier part (3a, 3b) in the parting plane.

## Revendications

1. Porte-moule (3a, 3b) destiné à recevoir un moule (2a, 2b) de mise en forme de corps creux, notamment de récipients, à partir de préformes en introduisant dans la préforme un agent de pression gazeux ou liquide sous pression,
lequel porte-moule est divisé verticalement, une partie au moins du porte-moule étant logée de façon à pouvoir pivoter autour d'un axe de rotation (A) de sorte que les deux parties (3a, 3b) peuvent, au moyen d'un mécanisme d'entraînement (6), passer d'une position ouverte à une position fermée,
et le porte-moule (3a, 3b) et le mécanisme d'entraînement (6) étant espacés horizontalement l'un de l'autre et reliés entre eux par une zone de liaison (7, 7a, 7b) qui traverse un plan de séparation vertical (E),
une paroi de protection (8) étant disposée dans le plan de séparation (E) et la paroi de protection (8) étant étanchéifiée par rapport au porte-moule par des joints à lèvres (9).

2. Porte-moule (3a, 3b) selon la revendication 1, **caractérisé en ce que** les deux parties (3a, 3b) du porte-moule sont logées de façon à pouvoir pivoter autour d'un axe de rotation (A) respectif ou commun.

3. Porte-moule (3a, 3b) selon la revendication 2, **caractérisé en ce que** le porte-moule est agencé de ce côté et le mécanisme d'entraînement (6) de l'autre côté de l'axe de rotation (A) ou des axes de rotation des parties (3a, 3b) du porte-moule.

4. Porte-moule (3a, 3b) selon l'une des revendications 1 à 3, **caractérisé en ce que** la paroi de protection (8) assure une obturation au moins approximativement étanche aux liquides autour de la zone de liaison (7, 7a, 7b).

5. Porte-moule (3a, 3b) selon l'une des revendications 1 à 4, **caractérisé en ce que** le plan de séparation (E) contient l'axe de rotation (A) ou les axes de rotation de la ou des parties pivotantes (3a, 3b) du porte-moule.

6. Porte-moule (3a, 3b) selon l'une des revendications 1 à 5, **caractérisé en ce que** le rayon de courbure (R) des surfaces de la zone de liaison (7, 7a,7b) du porte-moule dans le plan de séparation correspond à leur distance (R) par rapport à l'axe de rotation (A) de la partie respective du porte-moule (3a, 3b).
